# EUROPEAN PATENT APPLICATION

(11) **EP 1 136 987 A1**
(43) Date of publication of application: **26.09.2001**
(21) Application number: 00954935.3
(22) Date of filing: 23.08.2000
(51) Int. Cl.: G11B 5/60, G11B 5/187, G11B 5/725, G11B 21/21

(54) **MAGNETIC RECORDING AND REPRODUCING DEVICE**

(30) Priority: 23.08.1999 JP 23620499
(71) Applicant: Sony Corporation, Tokyo 141-0001 (JP)
(72) Inventor: KURIHARA, Kenichi, Sony Corporation, Tokyo 141-0001 (JP); KISHII, Noriyuki, Sony Corporation, Tokyo 141-0001 (JP); IWAMOTO, Yutaka, Sony Corporation, Tokyo 141-0001 (JP)
(74) Representative: Müller, Frithjof E., Dipl.-Ing.
(86) International application number: JP0005650
(87) International publication number: WO0115147

(57) **Abstract**

The present invention provides a magnetic recording/reproducing apparatus including: a magnetic recording medium having at least a metal magnetic film formed on a non-magnetic support layer and a fluorine-based lubricant layer formed on that surface where the metal magnetic film is formed; and a magnetic head having its facing surface chemically modified by a hydrocarbon-based material to face to the magnetic recording medium.

## Description

### Technical Field

The present invention relates to a magnetic recording/reproducing apparatus and in particular, to a magnetic recording/reproducing apparatus having a lubricant between a magnetic head and a magnetic recording medium.

### Background Art

A magnetic recording medium is widely used as an audio tape, a video tape, a backup data cartridge, a hard disc, and the like. The magnetic recording medium may be a so-called paint type magnetic recording medium having magnetic layer formed by applying a magnetic paint containing a very fine ferromagnetic powder and a binder onto a non-magnetic support layer and drying the paint; or a so-called metal thin film type magnetic recording medium having a magnetic layer formed by deposition of a ferromagnetic metal material onto a non-magnetic support layer.

In these magnetic recording media, in order to minimize the spacing loss, the magnetic layer surface is made flat and smooth. In a high-density recording, a short wavelength is used for recording, which is easily affected by the surface roughness. Accordingly, it is especially important to control the surface roughness.

However, as the magnetic layer surface becomes more flat and smooth, the substantial contact area of the magnetic head with a sliding member is increased. Accordingly, a magnetic recording medium having a preferable flatness of the magnetic layer surface has a great friction coefficient, easily causing a so-called adhesion phenomenon (sticking force) with the sliding member during running, deteriorating the running capability and durability.

For example, in a magnetic recording/reproducing apparatus such as a hard disc and the like, in general, the flying-type method is used. That is, during a disc stop, a magnetic head is in contact with a disc, and when the disc is rotated at a high speed upon start, the magnetic head flies from the disc surface and recording/reproducing is performed in this state. In such a flying type, the magnetic head slides along the disc surface upon start, i.e., during a period of time from the disc rotation start until the magnetic head flies and upon operation stop, i.e., during a period of time from the moment the magnetic head is brought into contact with the disc until the disc rotation stops. Here, when the friction between the magnetic head and the disc is great, this deteriorates the running stability and causes wear of the magnetic recording medium and the magnetic head, deteriorating the durability. When this wear and damage reaches the magnetic layer, information recorded in the magnetic layer is destroyed, which is known as a head crush phenomenon. This deteriorates durability of the magnetic recording medium.

Moreover, recently, the magnetic recording/reproducing apparatus has been manufactured for a higher density and the flying amount of the magnetic head has been reduced. Furthermore, as the flying amount limit, a so-called contact method has been suggested in which recording/reproducing is performed while the magnetic head is always in contact with the magnetic recording medium surface.

Moreover, with increase of the data transfer rate, the sliding speed of the magnetic recording medium tends to be increased.

Thus, the flying amount of the magnetic head is reduced and the sliding speed of the magnetic recording medium is increased, which inevitably increases the time the magnetic head is in contact with the magnetic recording medium surface. This may cause the aforementioned friction problem.

To cope with this, a trial has been made to suppress the friction by applying a lubricant to form a lubricant film on the magnetic layer surface of the magnetic recording medium. Moreover, a trial has been made to coat the magnetic layer with a protection layer formed from an oxide, a carbide, a nitride, or the like and applying a lubricant to form a lubricant film on the protection film, so as to improve the wear resistance of the magnetic recording medium itself to prevent the aforementioned head crush and the like.

Currently, as the lubricant, various materials are studied. The lubricant used most often is a fluorine-based lubricant such as perfluoropolyether (PFPE) compound.

That is, in the magnetic recording/reproducing apparatus which is being widely used, the friction between a magnetic head and a magnetic recording medium is reduced by a fluorine-based lubricant existing between the magnetic head and the magnetic recording medium.

By the way, the wear reduction effect by the lubricant between the magnetic head and the magnetic recording medium is greatly affected by the various characteristics of the lubricant itself as well as the amount of the lubricant. That is, when the amount of the lubricant is small, the running stability of the magnetic recording medium is not sufficient and wear of the magnetic recording medium is caused. On the other hand, when the lubricant amount is too great, the meniscus force generated by the lubricant between the magnetic head and the magnetic recording medium is increased, which in turn increases the stiction force. This stiction force not only affects the running durability but also affects the data recording/reproducing itself by preventing rotation of the magnetic recording medium. Here, the "stiction force" includes an adherence of the magnetic head to the magnetic recording medium when they are in contact with each other such as a Contact Start Stop (hereinafter, referred to as CSS) test or flying stiction force during a random seek operation during a magnetic recording medium rotation and other sticking force generated between the magnetic head and the magnetic recording medium.

However, the lubricant existing on the magnetic recording medium tends to be reduced in amount as it is transferred to the magnetic head while the magnetic recording medium continues running. Accordingly, when considering the service life of the magnetic head and the magnetic recording medium, it is preferable that more lubricant exist on the magnetic recording medium.

### Disclosure of the Invention

It is therefore an object of the present invention to provide a magnetic recording/reproducing apparatus using a magnetic recording medium in which the stiction force generated between a magnetic head and the magnetic recording medium is reduced, thereby enabling to realize a magnetic recording/reproducing apparatus having a high durability.

The magnetic recording/reproducing apparatus according to the present invention includes a magnetic recording medium having at least a metal magnetic film formed on one main surface of a non-magnetic support layer and a fluorine-based lubricant layer formed on the surface layer of the main surface where the metal magnetic film is formed; and a magnetic head having a facing surface facing to the magnetic recording medium which surface is chemically modified by a hydrocarbon material. Here, the chemically modified surface of the magnetic head facing to the magnetic hard disc is in a state that a material such as a hydrocarbon material is adhered to the facing surface of the magnetic head facing to the hard disc. Moreover, the lubricant layer need not be formed over the entire surface of the metal magnetic film but may be formed in an island state, for example, on the metal magnetic film.

In the magnetic recording/reproducing apparatus according to the present invention, the magnetic recording medium has a fluorine-based lubricant layer formed on the surface layer of a main surface of the magnetic recording medium having the metal magnetic film and the magnetic head has a facing surface chemically modified by a hydrocarbon material facing to the magnetic recording medium.

Accordingly, the stiction force generated between the magnetic head and the magnetic recording medium can be suppressed to a low value and it is possible to prevent transfer of the lubricant from the magnetic recording medium to the magnetic head.

The magnetic recording/reproducing apparatus according to the present invention is characterized by a magnetic recording medium having at least a metal magnetic film formed on one main surface of a non-magnetic support layer and a hydrocarbon-based lubricant layer formed on that surface having the metal magnetic film and a magnetic head having a facing surface chemically modified by a fluorine-based material facing to the magnetic recording medium.

In the magnetic recording/reproducing apparatus according to the present invention, a hydrocarbon-based lubricant layer is formed on the surface of the magnetic recording medium having the metal magnetic film and the magnetic head has the facing surface chemically modified by a fluorine-based material to face to the magnetic recording medium.

Accordingly, the stiction force generated between the magnetic head and the magnetic recording medium can be suppressed to a low value and it is possible to prevent transfer of the lubricant from the magnetic recording medium to the magnetic head.

The magnetic recording/reproducing apparatus according to the present invention includes a magnetic recording medium having at least a metal magnetic film formed on one main surface of a non-magnetic support layer and a hydrocarbon-based lubricant layer formed on that surface having the metal magnetic film and a magnetic head having a facing surface chemically modified by a fluorine-based material facing to the magnetic recording medium, wherein the adherence measured by an atomic force microscope (hereinafter, referred to as an AFM) is smaller than the adherence obtained when the magnetic head has the facing surface not chemically modified to face to the magnetic recording medium.

In the magnetic recording/reproducing apparatus according to the present invention, the adherence measured by the AFM is smaller than the adherence obtained when the magnetic head has the facing surface not chemically modified to face to the magnetic recording medium.

### Brief Description of the Drawings

Fig. 1 is a perspective view of a configuration example of a magnetic hard disc apparatus according to the present invention.

Fig. 2 is a cross sectional view of a configuration example of a magnetic hard disc according to the present invention.

Fig. 3 is a cross sectional view of another configuration example of a magnetic hard disc according to the present invention.

Fig. 4 is a cross sectional view of still another configuration example of a magnetic hard disc according to the present invention.

Fig. 5 schematically shows a focus curve measured by an atomic force microscope.

### Best Mode for Carrying out the Invention

Description will now be directed to the present invention applied to a magnetic hard disc apparatus. It should be noted that in the drawings below, essential portions are enlarged and may have a different scale from the actual one.

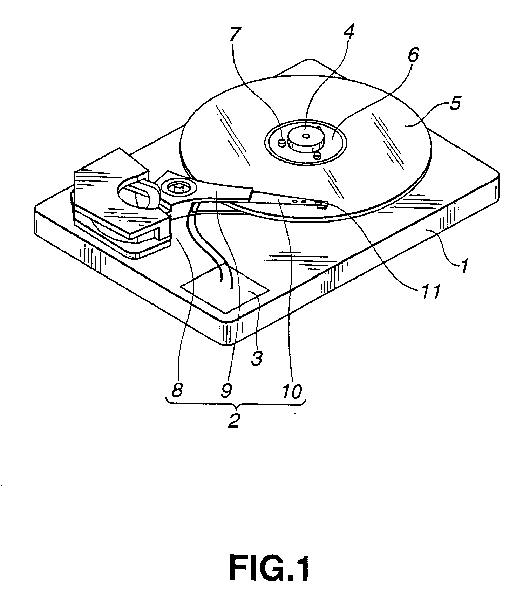

Firstly, referring to Fig. 1, explanation will be given on the outline of the magnetic hard disc apparatus. A rotary type head actuator 2 is rotatably arranged over a chassis 1 and a recording preamplifier 3 is mounted beside the rotary type head actuator 2. Moreover, a spindle motor (not depicted) constituting a drive mechanism is supported on the other side.

The chassis 1 is a flat rectangular member formed from a metal material and serves as a frame on which a member constituting the magnetic hard disc apparatus is mounted.

The spindle motor (not depicted) is arranged in such a manner that its drive shaft 4 protrudes through one surface of the chassis 1. The drive shaft 4 has its end portion where a circular recording medium support surface (not depicted) is formed. A magnetic hard disc 5 is supported by the recording medium support surface (not depicted) and sandwiched between the recording medium support surface and a clamp member 6 by the clamp member 6 and a fixing member 7 so as to be linked to and fixed to the drive shaft 4.

The rotary type head actuator 2 includes a drive unit 8, an arm 9, and a suspension 10. At the tip end of the suspension 10, a head slider 11 is mounted. The head slider 11 has a recording head chip (not depicted) and a reproducing head chip (not depicted). The rotary type head actuator 2 is rotated in approximately radial direction of the magnetic disc 5 by the drive unit 8.

The recording head chip and the reproducing head chip have facing surfaces chemically modified by a hydrocarbon material to face to the magnetic hard disc. Here, the hydrocarbon material used is expressed by Chemical Formula 1 below. The chemically modified facing surface of the magnetic head chip to face to the magnetic hard disc is realized by that a material such as a hydrocarbon material is adhered to the facing surface of the magnetic head chip to face to the magnetic hard disc.

### [Chemical Formula 1]

R1-X1

(wherein R1 represents a hydrocarbon portion, and X1 represents a functional group that is sorbable to the magnetic head.)

Moreover, in Chemical Formula 1 above, R1 may be selected from a group consisting of a straight chain hydrocarbon or branched chain hydrocarbon expressed by CₙYₘ (wherein, 1 < n < 20, n < m, and Y is an element selected from hydrogen and halogen, but in case of fluorine, it should be a partial fluoride of 5 or less), aryl group, and a heterocyclic aromatic group.

Moreover, in Chemical Formula 1 above, X1 may be selected from a group consisting of hydroxyl group, carboxyl group, carbonyl group, amino group, amide group, and sulfonic acid group that is sorbable to the magnetic head. As the X1, it is possible to use the one expressed by Chemical Formula 2 or Chemical Formula 3 below.

### [Chemical Formula 2]

-Si(X2)₃

(wherein X2 is selected from a group consisting of alkyl group, alkoxyl group, and halogen group.)

### [Chemical Formula 3]

-Ti(X3)₃

(wherein X3 is selected from a group consisting of alkyl group, alkoxyl group, and halogen group.)

The X2 and X3 in Chemical Formula 2 and Chemical Formula 3 may be alkyl group, alkoxy group, or halogen. Moreover, the three of X2 and X3 may not be identical but may be a commination of the aforementioned alkyl group, alkoxy group, or halogen. These materials are called in general silane coupling agent or titanate coupling agent.

The method to chemically modify the facing surface of the magnetic head to the magnetic hard disc using the aforementioned hydrocarbon-based materials may be that a solvent that can sufficiently dissolve the aforemetnioned organic compound such as toluene and hexane is selected and the facing surface is dipped in a resultant solution or that chemical modification may be performed without diluting the aforementioned hydrocarbon material. Moreover, when the dipping in solution is performed, the solvent used is not limited to a particular one.

Moreover, in order to reinforce the chemical modification of the magnetic head by the aforementioned hydrocarbon materials, it is possible to wash the magnetic head using an organic solvent or apply ultraviolet irradiation to the magnetic head before the chemical modification. Moreover, after chemically modifying the facing surface of the magnetic head facing to the magnetic head, it is possible to perform a thermal processing or washing using a solvent so as to remove an excessive hydrocarbon material that is not sorbable.

Each of the aforementioned hydrocarbon materials may be used solely or in combination with others.

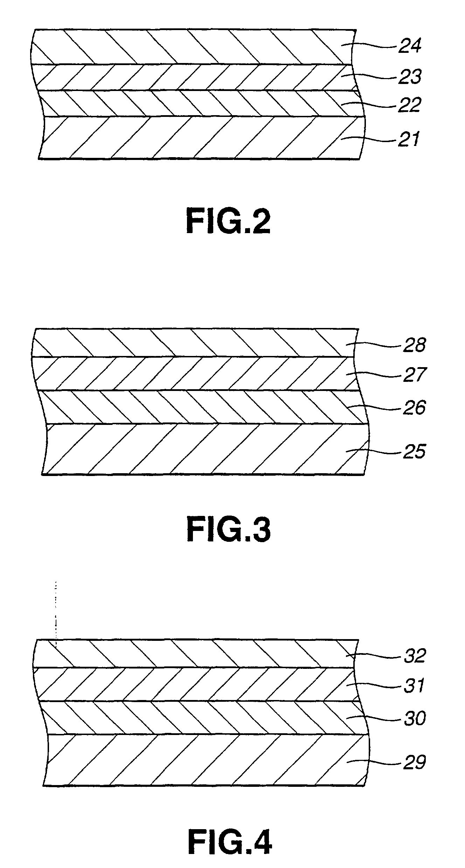

On the other hand, the magnetic hard disc according to the present invention, as shown in Fig. 2, includes a non-magnetic support layer 21, a metal magnetic film 22 formed on one main surface of this non-magnetic support layer 21, a carbon protection film 23 formed on the metal magnetic film 22, and a lubricant layer 24 formed on the carbon protection film 23. Here, the lubricant layer need not be formed over the entire surface of the metal magnetic film but may be formed in an island shape, for example, on the metal magnetic film.

As the material to form the non-magnetic support layer 21, there can be exemplified polyethylene terephthalate and other polyesters, polyethylene, polypropylene, and other polyolefins, cellulose, acetate, cellulose diacetate, cellulose butylate and other cellulose derivatives, polyvinyl chloride, polyvinylidene chloride, and other vinyl resins, polycarbonate, polyimide, polyamide, and other polymers, an Al-Mg alloy containing Al as a main content, and other aluminum alloys, light metals such as a titanium alloy, ceramics such as alumina glass, and the like. When the non-magnetic support layer 21 is formed from an Al alloy plate or a glass plate having rigidity, it is possible to form an oxide film or Ni-P film on the substrate surface such as alumite processing so as to harden the surface.

The metal magnetic film 22 may be formed, in the case of the paint-type magnetic hard disc, by using γ-Fe₂O₃ magnetic powder, epoxy resin serving as a binder, phenol resin, polyurethane and other polymers, Al₂O₃ particles to improve wear resistance, and the like.

Moreover, in the case of the thin film type magnetic hard disc, it is possible to use a Co-Ni alloy, Co-Pt alloy, Co-Cr alloy, Co-Pt-Cralloy, Co-Pt-Ni alloy, an alloy containing Co as the main content, and the like. As the magnetic hard disc intending for a high recording density, the thin film type magnetic disc medium is widely used.

The metal magnetic film 22 may be a single-layered film formed from these metal magnetic materials or a multi-layered film consisting of a plurality of layers having different compositions or different film formation conditions.

Moreover, to improve the orientation capability of the metal magnetic film 22 and to improve the magnetic characteristic such as the coercive force, it is possible to provide an undercoat layer formed from, for example, Cr between the non-magnetic support layer 21 and the metal magnetic film 22.

Furthermore, when the metal magnetic film 22 is a multi-layered film, it is possible to provide an intermediate layer between the adjacent layers so as to improve the adhesion capability and control the antimagnetism.

The metal magnetic film 22 may be formed by the thin film formation technique such as a vacuum deposition method for heating and evaporating a ferromagnetic material in a vacuum so as to be deposited on the non-magnetic support layer 21, or an ion plating method for performing evaporation of the ferromagnetic metal material under the condition of electric discharge, or a sputtering method for causing glow discharge in an atmosphere containing argon as the main content so that argon ions generated strike out atoms from the target surface, or other so-called PVD (physical vapor deposition) technique.

The carbon protection film 23 is arranged on the metal magnetic film 22 so as to prevent wear of the metal magnetic film 22 to give it a sliding resistance and protect the metal magnetic film 22 from an external humidity. Moreover, the protection film may be formed from a material such as a diamond-like carbon (DLC) having a high hardness, carbon nitride, SiO₂, and the like.

Here, the carbon protection film 23 is formed by the CVD method using a hydrocarbon-based gas and the like. It should be noted that the CVD method may be the plasma CVD method, ECR plasma CVD method, the arc jet plasma CVD, and the like.

The lubricant layer 24 may be formed by using a fluorine-based lubricant. Such a material may be, for example, perfluoropolyether (PFPE)-based fluorine-contained polymer. Moreover, the material may contain a low-molecular weight fluorocarbon or may contain hydrocarbon partially. Moreover, the lubricant layer 24 may be formed, for example, by the dipping method, the spin coat method, and other conventional known methods.

The magnetic hard disc apparatus having the aforementioned configuration is driven to rotate so that the magnetic hard disc angular velocity is constant and a signal is recorded/reproduced by a magnetic head (not depicted).

In this magnetic hard disc apparatus, the recording head chip and the reproducing head chip have facing surfaces chemically modified by a hydrocarbon material to face to the magnetic hard disc. Moreover, the lubricant layer 24 is formed from a fluorine-based lubricant on the carbon protection film 23 of the magnetic hard disc. Accordingly, in this magnetic hard disc apparatus using a combination of the magnetic head having the facing surface chemically modified by a hydrocarbon material to face to the magnetic hard disc and the magnetic hard disc having the fluorine-based lubricant layer, it is possible to reduce the meniscus force generated between the magnetic head and the magnetic hard disc, which in turn suppress the stiction force to a low value. Accordingly, it is possible to assure stable running of the magnetic hard disc even when the lubricant amount is increased. Sine no lubricant is transferred from the magnetic hard disc to the magnetic head, the lubrication effect can be obtained for a long period of time, increasing the service life of the magnetic head and the magnetic hard disc.

Moreover, in the magnetic hard disc apparatus according to the present invention, the magnetic head may have the facing surface chemically modified by a fluorine-based material to face to the magnetic hard disc and lubricant layer may be formed by a hydrocarbon-based lubricant on the magnetic hard disc.

That is, in the magnetic hard disc apparatus shown in Fig. 1, the recording head chip and the reproducing head chip have facing surfaces chemically modified by a fluorine-based material to face to the magnetic hard disc. Here, the fluorine-based material used can be expressed by Chemical Formula 4 shown below.

### [Chemical Formula 4]

R2-X4

(wherein R2 is a fluorocarbon portion, and X4 is a functional group that is chemically sorbable to a magnetic head.)

Moreover, in the Chemical Formula 4 above, R2 is a straight chain fluorocarbon, a branched chain fluorocarbon expressed by CₚF_{q} (in the formula above, 1 < p < 20, p < q) or a partial fluorocarbon expressed by Cₚ,F_{q},Hᵣ, (in the formula above, 1 < p' < 20, p' < q', r' < 6).

Moreover, in the Chemical Formula 4 above, X4 may be selected from a group consisting of hydroxyl group that is sorbable to the magnetic head, carboxyl group, carbonyl group, amino group, amide group, and sulfonic acid group. As the X4, it is possible to use the one expressed in Chemical Formula 5 or Chemical Formula 6 below.

### [Chemical Formula 5]

-Si(X5)₃

(wherein X5 is selected from a group consisting of alkyl group, alkoxyl group, and halogen.)

### [Chemical Formula 6]

-Ti(X6)₃

(wherein X6 is selected from a group consisting of alkyl group, alkoxyl group, and halogen.)

The X5 and X6 in the Chemical Formula 5 and Chemical Formula 6 above may be alkyl group, alkoxy group, or halogen. Moreover, three of the X5 and X6 need not be identical but may be different such as a combination of the aforementioned alkyl group, alkoxy group, or halogen. These materials are called in general silane coupling agent or titanate coupling agent.

The method to chemically modify the facing surface of the magnetic head using the aforementioned fluorine-based materials to face to the magnetic head is not limited to a particular method. For example, it is possible to select the GALDEN series (produced by Ausimont Co., Ltd) or HFE7000 series (produced by 3M Co., Ltd.) and perform dipping in the obtained solution, or to perform chemical modification without diluting the aforementioned fluorine-based materials. In the case of dipping in a solution, the solvent is not limited to a particular one.

Moreover, in order to reinforce the chemical modification of the magnetic head by the aforementioned fluorine-based material, it is possible to wash the magnetic head using an organic solvent or apply an ultraviolet irradiation before performing the chemical modification. Moreover, after chemically modifying the facing surface of the magnetic head to face to the magnetic hard disc, it is possible to perform a thermal processing or washing using a solvent to eliminate an excessive fluorine-based material that is not sorbable.

Each of the aforementioned fluorine-based materials may be used solely or in combination with others.

On the other hand, the magnetic hard disc according to the present invention, as shown in Fig. 3, includes a non-magnetic support layer 25, a metal magnetic film 26 formed on one main surface of this non-magnetic support layer 25, a carbon protection film 27 formed on the metal magnetic film 26, and a lubricant layer 28 formed on the carbon protection film 27.

The non-magnetic support layer 25, the metal magneitc film 26, and the carobn protection film 27 are identical to those which have been explained above and their explanations are omitted.

Hereinafter, explanation will be given on the lubricant layer 28.

The lubricant layer 28 may be formed by using those materials generally used in the magnetic recording medium such as a long chain hydrocarbon ester and fatty acid. Moreover, the lubricant layer 28 may be formed by the conventional known methods such as the dipping method and the spin coat method.

The magnetic hard disc apparatus having the aforementioned configuration drives to rotate a magnetic hard disc so that its angular velocity is constant and a signal is recorded/reproduced by a magnetic head (not depicted).

In this magnetic hard disc apparatus, the recording head chip and the reproducing head chip have facing surfaces chemically modified by a fluorine-based material to face to the magnetic hard disc. Moreover, the lubricant layer 28 is formed from a hydrocarbon-based lubricant on the carbon protection film 27 of the magnetic hard disc. Accordingly, in this magnetic hard disc apparatus using a combination of the magnetic head having the facing surface chemically modified by a fluorine-based material to face to the magnetic hard disc and the magnetic hard disc having the hydrocarbon-based lubricant layer, it is possible to reduce the meniscus force generated between the magnetic head and the magnetic hard disc, which in turn suppress the stiction force to a low value. Accordingly, it is possible to assure stable running of the magnetic hard disc even when the lubricant amount is increased. Sine no lubricant is transferred from the magnetic hard disc to the magnetic head, the lubrication effect can be obtained for a long period of time, increasing the service life of the magnetic head and the magnetic hard disc.

Explanation has been given on the magnetic hard disc apparatus, considering the combination of the lubricant and the material to be adhered to the facing surface of the magnetic head to the magnetic hard disc. Hereinafter, explanation will be given considering the adherence measured using an atomic force microscope.

Firstly, referring to Fig. 1, the magnetic hard disc apparatus will be outlined. The rotary type head actuator 2 is rotatably attached to the chassis 1. Beside that, the recording preamplifier 3 is attached. Moreover, a spindle motor (not depicted) constituting the drive mechanism is supported on the other side.

The chassis 1 is a flat rectangular member formed from a metal material and serves as a frame on which a member constituting the magnetic hard disc apparatus is mounted.

The spindle motor (not depicted) is arranged in such a manner that its drive shaft 4 protrudes through one surface of the chassis 1. The drive shaft 4 has its end portion where a circular recording medium support surface (not depicted) is formed. A magnetic hard disc 5 is supported by the recording medium support surface (not depicted) and sandwiched between the recording medium support surface and a clamp member 6 by the clamp member 6 and a fixing member 7 so as to be linked to and fixed to the drive shaft 4.

The rotary type head actuator 2 includes a drive unit 8, an arm 9, and a suspension 10. At the tip end of the suspension 10, a head slider 11 is mounted. The head slider 11 has a recording head chip (not depicted) and a reproducing head chip (not depicted). The rotary type head actuator 2 is rotated in approximately radial direction of the magnetic disc 5 by the drive unit 8.

The recording head chip and the reproducing head chip have facing surfaces chemically modified by a predetermined material to face to the magnetic hard disc.

On the other hand, as shown in Fig. 4, the magnetic hard disc according to the present invention includes a non-magnetic support layer 29, a metal magnetic film 30 formed on one main surface of this non-magnetic support layer 29, a carbon protection film 31 formed on the metal magnetic film 30, and a lubricant layer 32 formed on the carbon protection film 31.

The non-magnetic support layer 29, the metal magnetic film 30, and the carbon protection film 31 have configurations identical to those explained above and their explanations are omitted.

Hereinafter, explanation will be given on the lubricant layer 32.

The lubricant layer 32 may be formed by using conventional known lubricants such as a fluorine-based lubricant and a hydrocarbon-based lubricant. Moreover, the lubricant layer 32 may be formed by the conventional known methods such as the dipping method and the spin coat method.

The magnetic hard disc apparatus having the aforementioned configuration drives to rotate a magnetic hard disc so that its angular velocity is constant and a signal is recorded/reproduced by a magnetic head (not depicted).

Here, in the magnetic hard disc apparatus, the adherence measured by an atomic force microscope (hereinafter, referred to as AFM) is reduced as compared to the magnetic head having the facing surface not chemically modified to face to a magnetic recording medium.

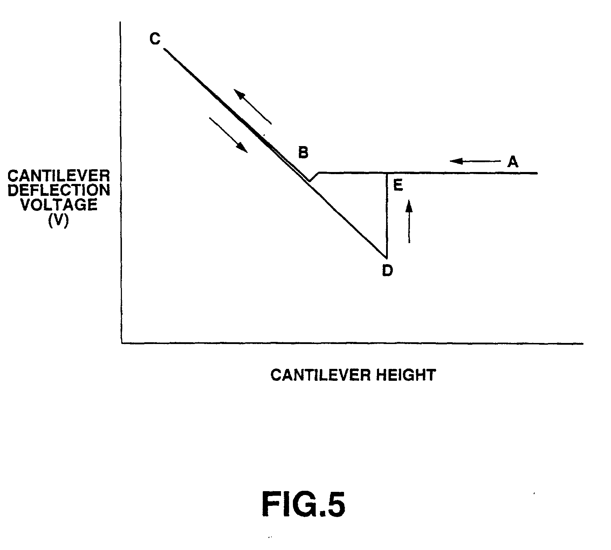

Here, the adherence is defined as a value from D to E in Fig. 5 showing a focus curve along a horizontal axis defining a movement distance of probe needle in the height direction on the magnetic hard disc and a vertical axis defining the force applied by a cantilever to the probe needle.

In Fig. 5, the vertical axis represents a cantilever deflection voltage. When Y (volt) is the cantilever deflection voltage, α is an inverse number of the focus curve CD inclination, and K is a spring constant of the cantilever, the cantilever deflection voltage can be converted into the adherence F (Newton) by Equation 1 shown below.

### [Equation 1]

F=Y×α×K

Accordingly, in this magnetic hard disc apparatus, a magnetic head having a facing surface to face to a magnetic hard disc which surface is chemically modified by a predetermined material is used in combination with a magnetic hard disc having a lubricant layer formed from a predetermined material, and the adherence measured by the AFM is reduced as compared to a case when the magnetic head has a facing surface to the magnetic recording medium which is surface is not chemically modified. Accordingly, the meniscus force generated between the magnetic head and the magnetic hard disc is reduced, which in turn suppresses the stiction force to a low value. Consequently, it is possible to assure a running durability of the magnetic hard disc even when the lubricant amount is increased. Moreover, since the lubricant is not transferred from the magnetic hard disc to the magnetic head, the lubrication effect continues for a long period of time, enabling to increase the service life of the magnetic head and the magnetic hard disc.

While explanation has been given on the magnetic hard disc apparatus according to the present invention, the present invention is not to be limited to the aforementioned but can be modified without departing from the spirit of the present invention. For example, the magnetic head is not limited to an MR head but may be a giant magneto-resistive head and the like. Moreover, the magnetic recording medium is not limited to a magnetic hard disc but may be a magnetic tape and the like.

Hereinafter, explanation will be given on specific experiment results for examples of the present invention but the present invention is not to be limited to the examples below.

### Example 1

Firstly, we prepared a solution containing Z-DOL (trade name produced by Ausimont Co., Ltd.) which is a representative perfluoropolyether (hereinafter, referred to PFPE) lubricant shown in Chemical Formula 7 below.

### [Chemical Formula 7]

HOCH₂-CF₂-O-(CF₂-CF₂-O)ₘ-(CF₂-O)ₙ-CF₂-CH₂OH

Here, as a solvent, a fluorine-based solvent HFE-7100 (trade name, produced by 3M Co., Ltd.) was used and the PFPE concentration was set to 0.3 weight %.

Next, a magnetic recording layer was formed on a 2.5-inch glass substrate having Ni-P by sputtering using an Ar gas as the sputter gas. Here, the magnetic recording layer was formed by successively forming an undercoat layer as an undercoat layer, a magnetic layer, and protection layer for protecting the magnetic layer in this order.

More specifically, firstly, the undercoat layer was formed by a Cr film with a thickness of 75 nm.

Next, a Co-Pt-Cr film was formed with a thickness of 30 nm as the magnetic layer. It should be noted that the composition ratio of Co, Pt, and Cr was as follows: Co 72%, Pt 13%, and Cr 15%.

Furthermore, as the protection layer, a carbon film was formed with a thickness of 20 nm.

Next, the magnetic hard disc (glide height about 20 nm) having the undercoat layer, the magnetic layer, and the protection layer formed thereon was immersed in a fluorine-based lubricant solution and a lubricant film was formed by the dipping method so as to obtain a film thickness of about 3 nm, thus completing a sample of a magnetic hard disc.

Next, chemical modification was performed to a magnetic hard disc facing surface of a magnetic head of the CSS (contact start stop) tester model 7300 (produced by Lotus Co., Ltd.). Here, the magnetic head is a magneto-resistive head equivalent to 2 Gbpsi and mounted on a negative-pressure slider.

The chemical modification of the magnetic hard disc facing surface of the magnetic head was performed as follows.

Firstly, as the carbon-based material, a compound expressed by Chemical Formula 8 below was dissolved in toluene with a concentration of 5 weight %.

### [Chemical Formula 8]

C₁₇H₃₅-OH

Next, the head slider of the CSS tester was immersed in the aforementioned solution for 1 hour.

Next, the head slider was taken out of the solution and heated in an oven at 100°C for 1 hour.

Lastly, carbon-based material that is not sorbable was removed by washing to obtain a sample slider.

### Examples 2 to 11

A sample magnetic hard disc and a sample slider were prepared in the same way as Example 1 except for that compounds shown in Table 1 were used as the carbon-based material.

**[Table 1]**

| | Material for chemically modifying the magnetic head | Stiction force (gf) | Cycles until head crush (number of times) |
|---|---|---|---|
| Example 1 | C₁₇H₃₅ ― OH | 2.2 | > 50000 |
| Example 2 | C₈H₁₇ ― COOH | 2.5 | > 50000 |
| Example 3 | C₁₇H₃₅ ― COOH | 1.7 | > 50000 |
| Example 4 | C₈H₁₇ ― Si ― (O ― CH₃)₃ | 2.3 | > 50000 |
| Example 5 | C₁₇H₃₅ ― Si ― (O ― CH₃)₃ | 1.5 | > 50000 |
| Example 6 | C₂F₅C₈H₁₆ ― Si ― Cl₃ | 2.2 | > 50000 |
| Example 7 | C₁₇H₃₅ ― Si ― Cl₃ | 1.4 | > 50000 |
| Example 8 | C₁₇H₃₅ ― Si ― (CH₃)₃ | 1.6 | > 50000 |
| Example 9 | C₁₇H₃₅ ― Ti ― (O ― CH₃)₃ | 1.6 | > 50000 |
| Example 10 | C₁₇H₃₅ ― Ti ― (CH₃)₃ | 1.9 | > 50000 |
| Example 11 | C₁₇H₃₅ ― Ti ― Cl₃ | 1.5 | > 50000 |
| Comparative Example 1 | ― | 5.5 | 25000 |
| Comparative Example 2 | ― | 1.5 | 5000 |
| Comparative Example 3 | F(CF₂)₈C₂H₄ ― Si ― Cl₃ | 6.0 | 30000 |
| Comparative Example 4 | C₁₇H₃₅ ― Si ― (O ― CH₃)₃ | 4.5 | 20000 |

### Comparative Example 1

A sample magnetic hard disc and a sample slider were prepared in the same way as Example 1 except for that no chemical modification was performed to the magnetic hard disc facing surface of the magnetic head.

### Comparative Example 2

A sample magnetic hard disc and a sample slider were prepared in the same way as Example 1 except for that no chemical modification was performed to the magnetic hard disc facing surface of the magnetic head and that the film thickness of the lubricant layer on the magnetic hard disc was set to 1.5 nm.

### Comparative Example 3

A sample magnetic hard disc and a sample slider were prepared in the same way as Example 1 except for that the magnetic hard disc facing surface of the magnetic head was chemically modified by the same fluorine-based material as used in the lubricant layer.

### Comparative Example 4

A sample magnetic hard disc and a sample slider were prepared in the same way as Example 1 except for that the lubricant layer on the magnetic hard disc was formed by heptyl stearate which is a hydrocarbon-based lubricant with a thickness of 3 nm.

### <Evaluation of characteristics>

Using the aforementioned CSS tester, a continuous sliding durability and stickiness were checked for the combinations of the sample magnetic hard discs and sample sliders prepared in Examples 1 to 11 and Comparative Examples 1 to 4. Moreover, the adherence was measured for Examples 6 and 7 and Comparative Examples 1 and 3.

### Continuous sliding durability (number of cycles until head crush)

The magnetic hard disc was rotated at 5000 rpm with the magnetic head pressing weight of 3g. The rotation of the magnetic hard disc was accelerated to 5000 rpm for 3 seconds after start of the rotation, the 5000 rpm was held for 4 seconds, and the rotation was stopped for 3 seconds. This constitutes one cycle. This cycle was repeated 50000 times to check the number of cycles before occurrence of a head crush.

The results are shown in Table 1.

### Stickiness (stiction force)

Measurement was performed under the same condition of the aforementioned continuous sliding durability and the stickiness (stiction force) was defined as the maximum friction force up to 3 seconds after start of ration of the magnetic hard disc at the first cycle.

The measurement results are shown in Table 1.

### Adherence

Measurement was performed at room temperature and normal humidity by using the atomic force microscope SPM-9500 (trade name, produced by Shimadzu Seisakusyo co., Ltd.) and Force Curve software for the SPM-9500, under the condition shown below and an average value obtained was used as the adherence.
Measurement range: entire lubricant layer
Sampling: 100 points

Here, the adherence is defined as a distance from D to E in the focus curve shown in Fig. 5 in which the horizontal axis represents a movement distance in the probe needle height distance on the magnetic hard disc and the vertical axis represents the force applied to the probe needle by the cantilever at each of the points.

In Fig. 5, the vertical axis represents the cantilever deflection voltage. When Y (volt) is the cantilever deflection voltage, α is an inverse number of the focus curve CD inclination, and K is the spring constant of the cantilever, the adherence F (Newton) can be calculated by Equation 1 shown below. The calculation results are shown in Fig. 2.

### [Equation 1]

F=Y×α×K

**[Table 2]**

| | Material for chemically modifying the magnetic head | Adherence by AFM measurement (nN) |
|---|---|---|
| Example 6 | C₂F₅C₈H₁₆ ― Si ― Cl₃ | * * * |
| Example 7 | C₁₇H₃₅ ― Si ― Cl₃ | 0.768 |
| Comparative Example 1 | ― | 15 |
| Comparative Example 3 | F(CF₂)₈C₂H₄ ― Si ― Cl₃ | 38.53 |

Table 1 shows that Comparative Example 1 having no chemical modification on the facing surface of the magnetic head to face to the magnetic hard disc has stiction force as high as 5.5 gf and the number of cycles until the head crush is 25000 cycles. This is because that the lubricant layer has a comparatively large thickness of about 3 nm and the meniscus force generated between the magnetic hard disc and the magnetic head by the lubricant layer is large.

On the other hand, as shown by Comparative Example 2, when no chemical modification is performed to the facing surface of the magnetic head to face to the magnetic hard disc and the lubricant layer is thin, the stiction force is reduced to 1.5 gf but the number of cycles is significantly lowered to 5000 cycles. This is because the lubricant layer film thickness is reduced, i.e., the lubricant amount existing on the magnetic hard disc surface is reduced, disabling a practical use.

In Comparative Example 3, a fluorine-based material is used to chemically modify the facing surface of the magnetic head to face to the magnetic hard disc. The stiction force is 6.0 gf and no reduction is observed in the stiction force. This is because the meniscus force is not reduced when the facing surface of the magnetic head to face to the magnetic hard disc is chemically modified by a material basically same as the lubricant.

The case of Comparative Example 4 is identical to Comparative Example 3. When the lubricant and the material for chemical modification of the facing surface of the magnetic head to face to the magnetic hard disc are both carbon-based materials, the meniscus force cannot be reduced significantly and as a result, the stiction force is not reduced.

As compared to this, as in Examples 1.to 11 in which a fluorine-based lubricant layer is formed on the magnetic hard disc and hydrocarbon-based material is used for chemical modification of the facing surface to face to the magnetic hard disc, as is clear from Table 1, the stiction force is suppressed to 1.5 to 2.5 gf and 50000 cycles were reached without causing a head crush. This shows that, by using a combination of the magnetic hard disc having a fluorine-based lubricant layer and the magnetic head having the facing surface chemically modified by a hydrocarbon material to face to the magnetic hard disc, it is possible to reduce the meniscus force generated between the magnetic hard disc and the magnetic head, which in turn reduces the stiction force.

In Examples 1 to 11, when consideration is taken on the different materials used for chemical modification of the magnetic head to face to the magnetic hard disc, it is expected that the magnetic head is coated firmly and sufficiently as in Examples 3, 5, 7, and 9 and a higher stiction force reduction effect can be observed in a carbon-based material containing carbonic acid, coupling agent, and a long chain alkyl having a high adsorption reaction to the magnetic head. This shows that it is preferable that the facing surface of the magnetic head to face to the magnetic hard disc be chemically modified by using a material which cannot be easily detached from the magnetic head surface and serves to reduce transfer of the fluorine-based lubricant. Moreover, the same effect can be expected for the hydrocarbon-based material containing carbonyl group, amino group, amide group, and sulfonic acid group. Moreover, the same effect can be expected when the hydrocarbon-based material adhered to the facing surface of the magnetic head to face to the magnetic hard disc contains as a hydrocarbon portion, branched chain hydrocarbon, aryl group, or heterocyclic aromatic group.

The aforementioned shows that by using the magnetic hard disc having a lubricant layer formed from a fluorine-based lubricant in combination with the magnetic head chemically modified by a hydrocarbon-based material, it is possible to reduce the adherence between the magnetic hard disc and the magnetic head.

Moreover, Table 2 shows that when the facing surface of the magnetic head to face to the magnetic hard disc is not chemically modified, the adherence is about 15 nN while in Example 7 in which the facing surface of the magnetic head to face to the magnetic hard disc is chemically modified, the adherence is significantly reduced to 0.764 nN. Moreover, in Example 6 in which the facing surface of the magnetic head to face to the magnetic hard disc is chemically modified by a partial fluoride hydrocarbon material, the adherence is 1.12 nN, i.e., the adherence is significantly reduced as compared to the magnetic head having a facing surface not chemically modified to face to the magnetic hard disc. In Comparative Example 3 in which the magnetic head is chemically modified by a fluorine-based material, the adherence is greatly increased to 38.53 nN. Moreover, comparison between the adherence and the stiction force of Examples 6 and 7 and Comparative Examples 1 and 3 shows that in Examples 6 and 7 having an adherence smaller than Comparative Example 1 in which no chemical modification is performed to the facing surface of the magnetic head to face to the magnetic hard disc, the stiction force is smaller than Comparative Example 1. In Comparative Example 3 having an adherence greater than Comparative Example 1 in which the facing surface of the magnetic head is not chemically modified to face to the magnetic hard disc, the stiction force is greater than Comparative Example 1.

This shows that in the magnetic hard disc apparatus, when a magnetic head having a facing surface chemically modified by a predetermined material to face to a magnetic hard disc is used in combination with a magnetic hard disc having a lubricant layer formed from a predetermined material, the adherence measured by the AFM is reduced as compared to a case when the facing surface of the magnetic head is not chemically modified to face to the magnetic recording medium, thereby suppressing to a low value the stiction force generated between the magnetic head and the magnetic hard disc.

### Example 12

Firstly, we prepared a solution containing heptyl stearate and stearic acid as representative hydrocarbon-based lubricants expressed in Chemical Formula 9 and Chemical Formula 10 below.

### [Chemical Formula 9]

C₇H₁₅OOC-C₁₇H₃₅

### [Chemical Formula 10]

CH₃(CH₂)₁₆COOH

Here, toluene was used as a solvent and the total concentration of heptyl stearate and stearic acid was set to 0.5 weight % (with weight ratio of 1 : 1).

Next, on a 2.5-inch glass substrate having Ni-P, a magnetic recording layer was formed by the sputtering method using Ar as the sputter gas. Here, the magnetic recording layer was formed by an undercoat layer as an undercoat of a magnetic layer, the magnetic layer, and a protection layer for protecting the magnetic layer successively layered in this order.

More specifically, the undercoat layer was formed by Cr with a thickness of 75 nm.

Next, the magnetic layer was formed by Co-Pt-Cr with a thickness of 30 nm. It should be noted that the composition ratio of Co, Pt, and Cr was as follows: Co 72%, Pt 13%, and Cr 15%.

Furthermore, the protection layer was formed from carbon with a thickness of 20 nm.

Next, the magnetic hard disc (glide height about 20 nm) having the undercoat layer, the magnetic layer, and the protection layer formed thereon was immersed in a hydrocarbon-based lubricant solution and a lubricant film was formed by the dipping method so as to obtain a film thickness of about 3 nm, thus completing a sample of a magnetic hard disc.

Next, chemical modification was performed to a magnetic hard disc facing surface of a magnetic head of the CSS tester model 7300 (produced by Lotus Co., Ltd.). Here, the magnetic head is a magneto-resistive head equivalent to 2 Gbpsi and mounted on a negative-pressure slider.

The chemical modification of the magnetic hard disc facing surface of the magnetic head was performed as follows.

Firstly, as the fluorine-based material, a compound expressed by Chemical Formula 11 below was dissolved in toluene with a concentration of 5 weight %.

### [Chemical Formula 11]

C₁₀H₂₁-OH

Next, the head slider of the CSS tester was immersed in the aforementioned solution for 1 hour.

Next, the head slider was taken out of the solution and heated in an oven at 100°C for 1 hour.

Lastly, fluorine-based material that is not sorbable was removed by washing in a fluorine-based solvent HFE-7200 (trade name, produced by 3M Co., Ltd.) to obtain a sample slider.

### Examples 13 to 22

Sample magnetic hard discs and sample sliders were prepared in the same way as Example 12 except for that compounds shown in Table 1 were used as the fluorine-based material.

### Comparative Example 5

A sample magnetic hard disc and a sample slider were prepared in the same way as Example 12 except for that no chemical modification was performed to the facing surface of the magnetic head to face to the magnetic hard disc.

### Comparative Example 6

A sample magnetic hard disc and a sample slider were prepared in the same way as Example 12 except for that no chemical modification was performed to the facing surface of the magnetic head to face to the magnetic hard disc and that the lubricant layer on the magnetic hard disc had a film thickness of 1.5 nm.

### Comparative Example 7

A sample magnetic hard disc and a sample slider were prepared in the same way as Example 12 except for that the facing surface of the magnetic head to face to the magnetichard disc was chemically modified by a hydrocarbon-based material identical to that of the lubricant layer of the magnetic hard disc.

### Comparative Example 8

A sample magnetic hard disc and a sample slider were prepared in the same way as Example 12 except for that the facing surface of the magnetic head to face to the magnetic hard disc was chemically modified by a partial fluoride.

### Comparative Example 9

A sample magnetic hard disc and a sample slider were prepared in the same way as Example 12 except for that the lubricant layer on the magnetic hard disc was formed by a fluorine-based lubricant Z-dol 2000 (produced by Ausimont Co., Ltd.) with a film thickness of 3 nm.

Combinations of the sample magnetic hard discs and the sample sliders prepared in Examples 12 to 22 and Comparative Examples 5 to 9 were subjected to the continuous sliding durability and stickiness test using the CSS tester. The results are shown in Table 3. Moreover, for Example 18 and Comparative Examples 5 and 7, the adherence was measured in the same way as mentioned above. The results are shown in Table 4.

**[Table 3]**

| | Material for chemically modifying the magnetic head | Stiction force (gf) | Cycles until head crush (number of times) |
|---|---|---|---|
| Example 12 | C₁₀F₂₁―OH | 2.2 | > 50000 |
| Example 13 | F(CF₂)₁₀C₂H₄ ― OH | 2.4 | > 50000 |
| Example 14 | C₁₇H₃₅ ― COOH | 1.7 | > 50000 |
| Example 15 | C₈H₁₇ ― COOH | 2.0 | > 50000 |
| Example 16 | F(CF₂)₈C₂H₄ ― Si ― (O ― CH₃)₃ | 1.7 | > 50000 |
| Example 17 | F(CF₂)₄C₂H₄ ― Si ― (O ― CH₃)₃ | 2.1 | > 50000 |
| Example 18 | F(CF₂)₈C₂H₄ ― Si ― Cl₃ | 1.6 | > 50000 |
| Example 19 | F(CF₂)₈C₂H₄ ― Si ― (O ― CH₃)₃ | 1.8 | > 50000 |
| Example 20 | F(CF₂)₈C₂H₄ ― Ti ― (O ― CH₃)₃ | 1.6 | > 50000 |
| Example 21 | F(CF₂)₈C₂H₄ ― Ti ― (CH₃)₃ | 1.9 | > 50000 |
| Example 22 | F(CF₂)₈C₂H₄ ― Ti ― Cl₃ | 1.5 | > 50000 |
| Comparative Example 5 | ― | 4.3 | 25000 |
| Comparative Example 6 | ― | 1.5 | 5000 |
| Comparative Example 7 | C₁₇H₃₅ ― Si ― (O ― CH₃)₃ | 4.5 | 30000 |
| Comparative Example 8 | F(CF₂)₄C₄H₈ ― Si ― (O ― CH₃)₃ | 4.8 | 20000 |
| Comparative Example 9 | F(CF₂)₈C₂H₄ ― Si ― (O ― CH₃)₃ | 6.0 | 15000 |

**[Table 4]**

| | Material for chemically modifying the magnetic head | Adherence by AFM measurement (nN) |
|---|---|---|
| Example 18 | F(CF₂)₈C₂H₄ ― Si ― Cl₃ | 0.57 |
| Comparative Example 5 | ― | 1.3 |
| Comparative Example 7 | C₁₇H₃₅ ― Si ― (O ― CH₃)₃ | 1.868 |

Table 3 shows that in Comparative Example 5 in which the facing surface of the magnetic head is not chemically modified to face to the magnetic hard disc, the stiction force is as high as 4.3 gf and the number of cycles until the head crush is 25000 cycles. This is caused by the fact that the lubricant layer has a large film thickness of about 3 nm, which results in a large meniscus force generated between the magnetic hard disc and the magnetic head by the lubricant layer.

On the other hand, as shown in Comparative Example 6, when the facing surface of the magnetic head to face to the magnetic hard disc is not chemically modified and the lubricant layer has a small film thickness, the stiction force is reduced to 1.5 gf but the number of cycles is greatly lowered to 5000 cycles. This is caused by the reduction in the lubricant layer film thickness, i.e., reduction in the lubricant amount existing on the magnetic hard disc surface, disabling practical use.

In Comparative Example 7, the facing surface of the magnetic head to face to the magnetic hard disc is chemically modified by a hydrocarbon-based material. The stiction force is 4.5 gf and reduction in the stiction force cannot be observed. This is because the meniscus force is not reduced when a material basically identical to the lubricant is used for chemical modification of the facing surface of the magnetic head to face to the magnetic hard disc.

In Comparative Example 8, a partial fluoride material is used for chemical modification of the facing surface of the magnetic head to face to the magnetic hard disc. Because of the affect from the hydrocarbon portion, it was impossible to obtain a sufficient effect.

In Comparative Example 9, in which basically identical hydrocarbon-based materials are used as the lubricant and as the material for chemical modification of the facing surface of the magnetic head to face to the magnetic hard disc, the meniscus force is not reduced significantly and accordingly, the stiction force is not reduced.

As compared to this, in Examples 12 to 22 in which the magnetic hard disc having a hydrocarbon-based lubricant layer is used in combination with a magnetic head having a facing surface chemically modified by a fluorine-based material to face to a magnetic hard disc, as is clear from Table 3, the stiction force is reduced to 1.5 to 2.5 gf and 50000 cycles were reached without causing any head crush.

This shows that by using the magnetic hard disc having the hydrocarbon-based lubricant layer in combination with the magnetic head having the facing surface chemically modified by the fluorine-based material to face to the magnetic hard disc, it is possible to reduce the meniscus force generated between the magnetic hard disc and the magnetic head, which in turn reduces the stiction force.

In Examples 12 to 22, when consideration is taken on the materials used for chemical modification of the magnetic head to face to the magnetic hard disc, it is expected that the magnetic head is coated firmly and sufficiently as in Examples 14, 16, 18, and 20, and a higher effect to reduce the stiction force can be observed for the carbonic acid having a higher adsorption to the magnetic head, or the carbon-based material containing a coupling agent and a carbon-based material having a long chain length. This shows that the material used for chemical modification of the facing surface of the magnetic head to face to the magnetic hard disc is preferably a material that is not easily detached from the magnetic head surface and reduces the transfer to the hydrocarbon-based lubricant. Moreover, the same effect can be expected for the fluorine-based material containing carbonyl group, amino group, amide group, and sulfonic acid group. Moreover, the same effect can be expected when the fluorine-based material to be adhered to the facing surface of the magnetic head to face to the magnetic hard disc is a material containing branched chain fluorocarbon as the fluorocarbon portion.

Moreover, Table 4 shows that when the magnetic head has its facing surface not chemically modified to face to the magnetic hard disc, the adherence is about 1.3 nN but in Example 18 in which the facing surface of the magnetic head is chemically modified by a fluorine-based material to face to the magnetic hard disc, the adherence is significantly reduced to 0.57 nN. In Comparative Example 7 in which the magnetic head is chemically modified by a hydrocarbon-based material, the adherence is as large as 1.868 nN. Moreover, comparison between the adherence and the stiction force of Example 18 and Comparative Examples 5 and 7 shows that in Example 18 having an adherence smaller than Comparative Example 5 in which the magnetic head has its facing surface not chemically modified to face to the magnetic hard disc, the stiction force is reduced as compared to Comparative Example 5. In Comparative Example 7 having an adherence greater than Comparative Example 5 in which the magnetic head has its facing surface not chemically modified to face to the magnetic hard disc, the stiction force is increased as compared to Comparative Example 5.

These facts show that in the magnetic hard disc apparatus, when the magnetic head has its facing surface chemically modified by a predetermined material and the magnetic hard disc has lubricant layer formed by a predetermined material, so that the adherence measured by the AFM is reduced as compared to the case when the facing surface of the magnetic head is not chemically modified to face to the magnetic recording medium, it is possible to suppress to a low value the stiction force generated between the magnetic head and the magnetic hard disc.

While the present invention has been explained through specific cases, the present invention is not to be limited to the aforementioned examples but may be modified without departing from the spirit of the present invention.

### Industrial Applicability

The magnetic recording/reproducing apparatus according to the present invention includes: a magnetic recording medium having a fluorine-based lubricant layer formed on one surface of the magnetic recording medium having a metal magnetic film; and a magnetic head having a facing surface chemically modified by a hydrocarbon-based material to face to the magnetic recording medium

Accordingly, the stiction force generated between the magnetic head and the magnetic recording medium is reduced to a low value and transfer of the lubricant from then magnetic recording medium to the magnetic head can be prevented.

In the magnetic recording/reproducing apparatus according to the present invention, a hydrocarbon-based lubricant layer is formed on one surface of the magnetic recording medium havingthe metal magnetic film and the magnetic head has its facing surface chemically modified by a fluorine-based material to face to the magnetic recording medium.

Accordingly, the stiction force generated between the magnetic head and the magnetic recording medium is suppressed to a low value and transfer of the lubricant from the magnetic recording medium to the magnetic head can be prevented.

The magnetic recording/reproduction apparatus according to the present invention includes: a magnetic recording medium having at least a metal magnetic film formed on one surface of a non-magnetic support layer and a lubricant layer formed on the surface of the metal magnetic film; and a magnetic head having a facing surface chemically modified to face to the magnetic recording medium, wherein the adherence measured by an atomic force microscope (AFM) is reduced as compared to a case when the facing surface of the magnetic head is not chemically modified to face to the magnetic recording medium.

For this, the stiction force generated between the magnetic head and the magnetic recording medium is suppressed to a low value.

Accordingly, the magnetic recording/reproducing apparatus according to the present invention enables to provide a magnetic recording/reproducing apparatus having a high durability.

## Claims

1. A magnetic recording/reproducing apparatus comprising:
a magnetic recording medium having at least a metal magnetic film formed on a non-magnetic support layer and a fluorine-based lubricant layer formed on that surface where the metal magnetic film is formed; and
a magnetic head having its facing surface chemically modified by a hydrocarbon-based material to face to the magnetic recording medium.

2. The magnetic recording/reproducing apparatus as claimed in Claim 1, wherein the hydrocarbon-based material is expressed by Chemical Formula 1 below: Chemical Formula 1
R1-X1
(wherein R1 is a hydrocarbon portion and X1 is a functional group that is sorbable to the magnetic head.)

3. The magnetic recording/reproducing apparatus as claimed in Claim 2, wherein the R1 is selected from a group consisting of: a straight chain hydrocarbon or branched chain hydrocarbon (wherein 1 < n <20, n < m, and Y is an element selected from a group consisting of hydrogen and halogen but in case of fluorine, it is a partial fluoride of 5 or less), aryl group, and heterocyclic aromatic groups.

4. The magnetic recording/reproducing apparatus as claimed in Claim 1, wherein the X1 is selected from a group consisting of a hydroxyl group, carboxyl group, carbonyl group, amino group, amide group, and sulfonic acid group.

5. The magnetic recording/reproducing apparatus as claimed in Claim 1, wherein the X1 is expressed by Chemical Formula 2 below:
Chemical Formula 2
-Si(X2)₃
(wherein X2 is selected from a group consisting of an alkyl group, alkoxyl group, and halogen.)

6. The magnetic recording/reproducing apparatus as claimed in Claim 1, wherein the X1 is expressed by Chemical Formula 3 below:
Chemical Formula 3
-Ti(X3)₃
(wherein X3 is selected from a group consisting of an alkyl group, alkoxyl group, and halogen.)

7. The magnetic recording/reproducing apparatus as claimed in Claim 1, wherein the magnetic recording medium is a magnetic hard disc.

8. A magnetic recording/reproducing apparatus comprising:
a magnetic recording medium having at least a metal magnetic film formed on a non-magnetic support layer and a hydrocarbon-based lubricant layer formed on that surface where the metal magnetic film is formed; and
a magnetic head having its facing surface chemically modified by a fluorine-based material to face to the magnetic recording medium.

9. The magnetic recording/reproducing apparatus as claimed in Claim 8, wherein the fluorine-based material is expressed by Chemical Formula 4 below:
Chemical Formula 4
R2-X4
(wherein R2 is a fluorocarbon portion and X4 is a functional group that is chemically sorbable to the magnetic head.)

10. The magnetic recording/reproducing apparatus as claimed in Claim 9, wherein the R2 is a straight chain fluorocarbon, branched chain fluorocarbon expressed by CₚF_{q} (wherein 1 < p < 20, and p < q) or a partial fluorocarbon expressed by Cₚ,F_{q},Hᵣ, (wherein 1 < p' < 20, p' <q', and r' < 6).

11. The magnetic recording/reproducing apparatus as claimed in Claim 8, wherein the X4 is selected from a group consisting of a hydroxyl group, carboxyl group, carbonyl group, amino group, amide group, and sulfonic acid group.

12. The magnetic recording/reproducing apparatus as claimed in Claim 8, wherein the X4 is expressed by Chemical Formula 5 below:
Chemical Formula 5
-Si(X5)₃
(wherein X5 is selected from a group consisting of an alkyl group, alkoxyl group, and halogen.)

13. The magnetic recording/reproducing apparatus as claimed in Claim 8, wherein the X4 is expressed by Chemical Formula 6 below:
Chemical Formula 6
-Ti(X6)₃
(wherein X6 is selected from a group consisting of an alkyl group, alkoxyl group, and halogen.)

14. The magnetic recording/reproducing apparatus as claimed in Claim 8, wherein the magnetic recording medium is a magnetic hard disc.

15. A magnetic recording/reproducing apparatus comprising:
a magnetic recording medium having at least a metal magnetic film formed on a non-magnetic support layer and a lubricant layer formed on that surface where the metal magnetic film is formed; and
a magnetic head having its facing surface chemically modified to face to the magnetic recording medium,
wherein the adherence measured by an atomic force microscope is reduced as compared to a case when the facing surface of the magnetic head to face to the magnetic recording medium is not chemically modified.
